(19) Europäisches Patentamt / European Patent Office / Office européen des brevets

(11) **EP 3 054 729 A1**

(12) **EUROPEAN PATENT APPLICATION**
published in accordance with Art. 153(4) EPC

(43) Date of publication:
**10.08.2016 Bulletin 2016/32**

(51) Int Cl.:
***H04W 52/02*** (2009.01)

(21) Application number: **13896806.0**

(22) Date of filing: **28.10.2013**

(86) International application number:
**PCT/CN2013/086061**

(87) International publication number:
**WO 2015/061940 (07.05.2015 Gazette 2015/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Huawei Technologies Co., Ltd.
Longgang District
Shenzhen, Guangdong 518129 (CN)**

(72) Inventor: **SONG, Jiantao
Shenzhen
Guangdong 518129 (CN)**

(74) Representative: **Thun, Clemens
Mitscherlich PartmbB
Patent- und Rechtsanwälte
Sonnenstraße 33
80331 München (DE)**

(54) **RRC STATE CONTROL METHOD, DEVICE AND APPARATUS**

(57) Disclosed are an RRC status control method, apparatus, and device, where the method includes: when current processing of a service is performed, determining a time to trigger interval between a current time to trigger and a next time to trigger of the service according to a historical time to trigger interval of the service; when processing of each action in the service is performed, determining whether the action needs to use a high speed channel; and if the action does not need to use a high speed channel, determining, according to the time to trigger interval between the current time to trigger and the next time to trigger of the service, that an RRC status currently needed by the service is CELL-DCH or CELL-FACH. The present application can reduce wastes of radio network resources and terminal electric energy.

When current processing of a service is performed, determine a time to trigger interval between a current time to trigger and a next time to trigger of the service according to a historical time to trigger interval of the service — 101

When processing of each action in the service is performed, determine whether the action needs to use a high speed channel — 102

If the action does not need to use a high speed channel, determine, according to the time to trigger interval between the current time to trigger and the next time to trigger of the service, that an RRC status currently needed by the service is CELL-DCH or CELL-FACH — 103

FIG. 1

**Description**

**TECHNICAL FIELD**

The present invention relates to the communications field, and in particular, to a radio resource control (Radio Resource Control, RRC) status control method, apparatus, and device.

**BACKGROUND**

In a Universal Mobile Telecommunications System (Universal Mobile Telecommunications System, UMTS) network, a user equipment (User Equipment, UE) generally has two basic operating modes, which are an idle (IDLE) mode and a connected mode. In the idle mode, the UE is in a standby state without a service that needs to be processed, and there is no connection between the UE and a network side device; when RRC connection establishment is completed between the UE and the network side device, the UE is transferred from the idle mode to the connected mode; in the connected mode, the UE has three RRC statuses, which are cell-dedicated channel (Cell-DCH), cell-forward access channel (Cell-FACH), and cell/UMTS terrestrial radio access network registration area-paging channel (Cell/URA-PCH). In the Cell-DCH state, the UE has a dedicated channel (Dedicated Channel, DCH) or a high speed packet access (High Speed Packet Access, HSPA) channel, and the UE performs high-speed data transmission with relatively high energy consumption; in the Cell-FACH state, the UE performs low-speed data transmission with medium energy consumption; in the Cell/URA-PCH state, the UE does not perform data transmission in uplink and downlink, and the UE consumes energy similar to that in the idle mode to maintain an RRC connection to a UMTS terrestrial radio access network (UMTS Terrestrial Radio Access Network, UTRAN).

To efficiently use radio resources and reduce terminal power consumption, the network side device may control the UE to perform an RRC status transition by using a dynamic channel allocation algorithm according to usage of a radio link control (Radio Link Control, RLC) buffer. Specifically, when the network side device, such as a radio network controller (Radio Network Controller, RNC), controls the UE to perform an RRC status transition from Cell-DCH to Cell-FACH, it is required to wait for the UE to report a 4B event and wait for an inactivity timer to time out; to report the 4B event, a terminal needs to wait for a time to trigger (time to trigger) event to time out. In addition, when the network side device controls the UE to perform an RRC status transition in a different transition path, it is required to consume a specific amount of signaling.

If timeout periods of a time to trigger timer and the inactivity timer are set excessively long, the network side device cannot control in time the UE to perform the RRC status transition, and the UE and the network side device need to consume some energy to maintain a current RRC status of the UE, thereby wasting radio network resources and electric energy of the terminal; if the timeout periods of the time to trigger timer and the inactivity timer are set excessively short, the network side device controls the UE to frequently perform the RRC status transition, which increases a signaling resource overhead between the network side device and the UE and also wastes the radio network resources and the electric energy of the terminal.

**SUMMARY**

Embodiments of the present invention provide an RRC status control method and apparatus, which can reduce a waste of radio network resources and terminal electric energy.

According to a first aspect, an embodiment of the present invention provides an RRC status control method, and the method includes:

when current processing of a service is performed, determining a time to trigger interval between a current time to trigger and a next time to trigger of the service according to a historical time to trigger interval of the service;
when processing of each action in the service is performed, determining whether the action needs to use a high speed channel; and
if the action does not need to use a high speed channel, determining, according to the time to trigger interval between the current time to trigger and the next time to trigger of the service, that an RRC status currently needed by the service is CELL-DCH or CELL-FACH.

With reference to the first aspect, in a first possible implementation manner of the first aspect, the determining, according to the time to trigger interval between the current time to trigger and the next time to trigger of the service, that an RRC status currently needed by the service is CELL-DCH or CELL-FACH includes:

determining whether the time to trigger interval between the current time to trigger and the next time to trigger of the service is greater than preset duration of an inactivity timer;

if greater than, determining that the RRC status currently needed by the service is CELL-FACH; and

if not greater than, determining that the RRC status currently needed by the service is CELL-DCH.

With reference to the first aspect, in a second possible implementation manner of the first aspect, after the determining a time to trigger interval between a current time to trigger and a next time to trigger of the service, the method further includes:

determining whether the time to trigger interval between the current time to trigger and the next time to trigger of the service is greater than preset duration of an inactivity timer, and obtaining a determining result; and

accordingly, the determining, according to the time to trigger interval between the current time to trigger and the next time to trigger of the service, that an RRC status currently needed by the service is CELL-DCH or CELL-FACH includes:

acquiring the determining result; and

determining, according to the determining result, that the RRC status currently needed by the service is CELL-DCH or CELL-FACH.

With reference to the first aspect, in a third possible implementation manner of the first aspect, the method further includes: determining, according to historical usage duration of a high speed channel in each processing of the service, usage duration of a high speed channel in the current processing of the service; and

accordingly, when it is determined that the RRC status currently needed by the service is CELL-DCH or CELL-FACH, it is further determined according to the usage duration of the high speed channel in the current processing of the service.

With reference to the third possible implementation manner of the first aspect, in a fourth possible implementation manner of the first aspect, the determining, according to the time to trigger interval between the current time to trigger and the next time to trigger of the service, that an RRC status currently needed by the service is CELL-DCH or CELL-FACH includes:

determining whether the time to trigger interval between the current time to trigger and the next time to trigger of the service is greater than the sum of the usage duration of the high speed channel in the current processing of the service and preset duration of an inactivity timer;

if greater than, determining that the RRC status currently needed by the service is CELL-FACH; and

if not greater than, determining that the RRC status currently needed by the service is CELL-DCH.

With reference to the third possible implementation manner of the first aspect, in a fifth possible implementation manner of the first aspect, after the determining a time to trigger interval between a current time to trigger and a next time to trigger of the service and the determining usage duration of a high speed channel in the current processing of the service, the method further includes:

determining whether the time to trigger interval between the current time to trigger and the next time to trigger of the service is greater than the sum of the usage duration of the high speed channel in the current processing of the service and preset duration of an inactivity timer, and obtaining a determining result; and

accordingly, the determining, according to the time to trigger interval between the current time to trigger and the next time to trigger of the service, that an RRC status currently needed by the service is CELL-DCH or CELL-FACH includes:

acquiring the determining result; and

determining, according to the determining result, that the RRC status currently needed by the service is CELL-DCH or CELL-FACH.

With reference to the first aspect, and/or the first possible implementation manner of the first aspect, and/or the second possible implementation manner of the first aspect, and/or the third possible implementation manner of the first aspect, and/or the fourth possible implementation manner of the first aspect, and/or the fifth possible implementation manner of the first aspect, in a sixth possible implementation manner of the first aspect, the method further includes:

determining an RRC status of a UE according to RRC statuses currently needed by services.

With reference to the sixth possible implementation manner of the first aspect, in a seventh possible implementation manner of the first aspect, the determining an RRC status of a UE according to RRC statuses currently needed by services includes:

determining that a highest RRC status among the RRC statuses currently needed by the services is the RRC status of the UE.

With reference to the first aspect, and/or the first possible implementation manner of the first aspect, and/or the second possible implementation manner of the first aspect, and/or the third possible implementation manner of the first aspect, and/or the fourth possible implementation manner of the first aspect, and/or the fifth possible implementation manner of the first aspect, and/or the sixth possible implementation manner of the first aspect, and/or the seventh possible implementation manner of the first aspect, in an eighth possible implementation manner of the first aspect, the determining a time to trigger interval between a current time to trigger and a next time to trigger of the service according to a historical time to trigger interval of the service includes:

calculating the time to trigger interval between the current time to trigger and the next time to trigger of the service by using a formula pageInterval (In+1)=a$\times$pageInterval (In-1)+(1-a)$\times$pageInterval (In), where:

pageInterval (In+1) indicates the time to trigger interval between the current time to trigger and the next time to trigger of the service; pageInterval (In) indicates a time interval between a previous time to trigger and the current time to trigger of the service; pageInterval (In-1) indicates a time interval between a time to trigger previous to the previous time to trigger and the previous time to trigger of the service; a is a coefficient, and $0 < a < 1$.

With reference to the third possible implementation manner of the first aspect, and/or the fourth possible implementation manner of the first aspect, and/or the fifth possible implementation manner of the first aspect, and/or the sixth possible implementation manner of the first aspect, and/or the seventh possible implementation manner of the first aspect, and/or the eighth possible implementation manner of the first aspect, in a ninth possible implementation manner of the first aspect, the determining, according to historical usage duration of a high speed channel in each processing of the service, usage duration of a high speed channel in the current processing of the service includes:

calculating the usage duration of the high speed channel in the current processing of the service by using a formula pageDuration(Dn)=b$\times$pageDuration (Dn-2)+(1-b)$\times$ pageDuration(Dn-1), where:

pageDuration(Dn) indicates the usage duration of the high speed channel in the current processing of the service; pageDuration(Dn-1) indicates usage duration of a high speed channel in previous processing of the service; pageDuration(Dn-2) indicates usage duration of a high speed channel in processing previous to the previous processing of the service; b is a coefficient, and $0 < b < 1$.

With reference to the first aspect, and/or the first possible implementation manner of the first aspect, and/or the second possible implementation manner of the first aspect, and/or the third possible implementation manner of the first aspect, and/or the fourth possible implementation manner of the first aspect, and/or the fifth possible implementation manner of the first aspect, and/or the sixth possible implementation manner of the first aspect, and/or the seventh possible implementation manner of the first aspect, and/or the eighth possible implementation manner of the first aspect, and/or the ninth possible implementation manner of the first aspect, in a tenth possible implementation manner of the first aspect, the method further includes:

indicating the RRC status of the UE to a radio network device.

With reference to the tenth possible implementation manner of the first aspect, in an eleventh possible implementation manner of the first aspect, the indicating the RRC status of the UE to a radio network device includes:

indicating the RRC status of the UE to the radio network device by using an open API provided by the radio network device; or
sending the RRC status of the UE to the radio network device by carrying the RRC status of the UE in an SCRI message.

According to a second aspect, an embodiment of the present invention provides an RRC status control apparatus, and the apparatus includes:

a first determining unit, configured to: when current processing of a service is performed, determine a time to trigger interval between a current time to trigger and a next time to trigger of the service according to a historical time to trigger interval of the service;

a judging unit, configured to: when processing of each action in the service is performed, determine whether the action needs to use a high speed channel; and

a second determining unit, configured to: if the judging unit determines that the action does not need to use a high speed channel, determine, according to the time to trigger interval between the current time to trigger and the next time to trigger of the service that is determined by the first determining unit, that an RRC status currently needed by the service is CELL-DCH or CELL-FACH.

With reference to the second aspect, in a first possible implementation manner of the second aspect, the second determining unit is specifically configured to:

determine whether the time to trigger interval between the current time to trigger and the next time to trigger of the service is greater than preset duration of an inactivity timer;

if greater than, determine that the RRC status currently needed by the service is CELL-FACH; and

if not greater than, determine that the RRC status currently needed by the service is CELL-DCH.

With reference to the second aspect, in a second possible implementation manner of the second aspect, the first determining unit is further configured to: determine whether the time to trigger interval between the current time to trigger and the next time to trigger of the service is greater than preset duration of an inactivity timer, and obtain a determining result; and

accordingly, the second determining unit is specifically configured to: if the judging unit determines that the action does not need to use a high speed channel, acquire the determining result obtained by the first determining unit, and determine, according to the determining result, that the RRC status currently needed by the service is CELL-DCH or CELL-FACH.

With reference to the second aspect, in a third possible implementation manner of the second aspect, the first determining unit is further configured to: determine, according to historical usage duration of a high speed channel in each processing of the service, usage duration of a high speed channel in the current processing of the service; and

accordingly, the second determining unit is specifically configured to: if the judging unit determines that the action does not need to use a high speed channel, determine, according to the time to trigger interval between the current time to trigger and the next time to trigger of the service and the usage duration of the high speed channel in the current processing of the service that are determined by the first determining unit, that the RRC status currently needed by the service is CELL-DCH or CELL-FACH.

With reference to the third possible implementation manner of the second aspect, in a fourth possible implementation manner of the second aspect, the second determining unit is specifically configured to:

determine whether the time to trigger interval between the current time to trigger and the next time to trigger of the service is greater than the sum of the usage duration of the high speed channel in the current processing of the service and preset duration of an inactivity timer;

if greater than, determine that the RRC status currently needed by the service is CELL-FACH; and

if not greater than, determine that the RRC status currently needed by the service is CELL-DCH.

With reference to the third possible implementation manner of the second aspect, in a fifth possible implementation manner of the second aspect, the first determining unit is further configured to: determine whether the time to trigger interval between the current time to trigger and the next time to trigger of the service is greater than the sum of the usage duration of the high speed channel in the current processing of the service and preset duration of an inactivity timer, and obtain a determining result; and

accordingly, the second determining unit is specifically configured to: if the judging unit determines that the action does not need to use a high speed channel, acquire the determining result obtained by the first determining unit, and determine, according to the determining result, that the RRC status currently needed by the service is CELL-DCH or CELL-FACH.

With reference to the second aspect, and/or the first possible implementation manner of the second aspect, and/or the second possible implementation manner of the second aspect, and/or the third possible implementation manner of the second aspect, and/or the fourth possible implementation manner of the second aspect, and/or the fifth possible implementation manner of the second aspect, in a sixth possible implementation manner of the second aspect, the apparatus further includes:

> a third determining unit, configured to determine an RRC status of a UE according to RRC statuses currently needed by services and determined by the second determining unit.

With reference to the sixth possible implementation manner of the second aspect, in a seventh possible implementation manner of the second aspect, the third determining unit is specifically configured to:

> determine that a highest RRC status among the RRC statuses currently needed by the services is the RRC status of the UE.

With reference to the second aspect, and/or the first possible implementation manner of the second aspect, and/or the second possible implementation manner of the second aspect, and/or the third possible implementation manner of the second aspect, and/or the fourth possible implementation manner of the second aspect, and/or the fifth possible implementation manner of the second aspect, and/or the sixth possible implementation manner of the second aspect, and/or the seventh possible implementation manner of the second aspect, in an eighth possible implementation manner of the second aspect, the first determining unit is specifically configured to:

> calculate the time to trigger interval between the current time to trigger and the next time to trigger of the service by using a formula pageInterval (In+1)=a×pageInterval (In-1)+(1-a)×pageInterval (In), where:
>
>> pageInterval (In+1) indicates the time to trigger interval between the current time to trigger and the next time to trigger of the service; pageInterval (In) indicates a time interval between a previous time to trigger and the current time to trigger of the service; pageInterval (In-1) indicates a time interval between a time to trigger previous to the previous time to trigger and the previous time to trigger of the service; a is a coefficient, and $0 < a < 1$.

With reference to the third possible implementation manner of the second aspect, and/or the fourth possible implementation manner of the second aspect, and/or the fifth possible implementation manner of the second aspect, and/or the sixth possible implementation manner of the second aspect, and/or the seventh possible implementation manner of the second aspect, and/or the eighth possible implementation manner of the second aspect, in a ninth possible implementation manner of the second aspect, the first determining unit is specifically configured to:

> calculate the usage duration of the high speed channel in the current processing of the service by using a formula pageDuration(Dn)=b×pageDuration (Dn-2)+(1-b)× pageDuration(Dn-1), where:
>
>> pageDuration(Dn) indicates the usage duration of the high speed channel in the current processing of the service; pageDuration(Dn-1) indicates usage duration of a high speed channel in previous processing of the service; pageDuration(Dn-2) indicates usage duration of a high speed channel in processing previous to the previous processing of the service; b is a coefficient, and $0 < b < 1$.

With reference to the second aspect, and/or the first possible implementation manner of the second aspect, and/or the second possible implementation manner of the second aspect, and/or the third possible implementation manner of the second aspect, and/or the fourth possible implementation manner of the second aspect, and/or the fifth possible implementation manner of the second aspect, and/or the sixth possible implementation manner of the second aspect, and/or the seventh possible implementation manner of the second aspect, and/or the eighth possible implementation manner of the second aspect, and/or the ninth possible implementation manner of the second aspect, in a tenth possible implementation manner of the second aspect, the apparatus further includes:

> an indicating unit, configured to indicate the RRC status of the UE that is determined by the third determining unit to a radio network device.

With reference to the tenth possible implementation manner of the second aspect, in an eleventh possible implementation manner of the second aspect, the indicating unit is specifically configured to:

indicate the RRC status of the UE to the radio network device by using an open API provided by the radio network device; or

send the RRC status of the UE to the radio network device by carrying the RRC status of the UE in an SCRI message.

According to a third aspect, an embodiment of the present invention provides an RRC status control device, and the device includes:

a processor, configured to: when current processing of a service is performed, determine a time to trigger interval between a current time to trigger and a next time to trigger of the service according to a historical time to trigger interval of the service; when processing of each action in the service is performed, determine whether the action needs to use a high speed channel; and if the action does not need to use a high speed channel, determine, according to the time to trigger interval between the current time to trigger and the next time to trigger of the service, that an RRC status currently needed by the service is CELL-DCH or CELL-FACH.

With reference to the third aspect, in a first possible implementation manner of the third aspect, the processor is specifically configured to: when the current processing of the service is performed, determine the time to trigger interval between the current time to trigger and the next time to trigger of the service according to the historical time to trigger interval of the service;

when the processing of each action in the service is performed, determine whether the action needs to use the high speed channel;

if the action does not need to use the high speed channel, determine whether the time to trigger interval between the current time to trigger and the next time to trigger of the service is greater than preset duration of an inactivity timer;

if greater than, determine that the RRC status currently needed by the service is CELL-FACH; and

if not greater than, determine that the RRC status currently needed by the service is CELL-DCH.

With reference to the third aspect, in a second possible implementation manner of the third aspect, the processor is specifically configured to: when the current processing of the service is performed, determine the time to trigger interval between the current time to trigger and the next time to trigger of the service according to the historical time to trigger interval of the service; and determine whether the time to trigger interval between the current time to trigger and the next time to trigger of the service is greater than preset duration of an inactivity timer, and obtain a determining result;

when the processing of each action in the service is performed, determine whether the action needs to use the high speed channel;

acquire the determining result if the action does not need to use the high speed channel; and

determine, according to the determining result, that the RRC status currently needed by the service is CELL-DCH or CELL-FACH.

With reference to the third aspect, in a third possible implementation manner of the third aspect, the processor is specifically configured to: when the current processing of the service is performed, determine the time to trigger interval between the current time to trigger and the next time to trigger of the service according to the historical time to trigger interval of the service; and determine, according to historical usage duration of a high speed channel in each processing of the service, usage duration of a high speed channel in the current processing of the service;

when the processing of each action in the service is performed, determine whether the action needs to use the high speed channel; and

if the action does not need to use the high speed channel, determine, according to the time to trigger interval between the current time to trigger and the next time to trigger of the service and the usage duration of the high speed channel in the current processing of the service, that the RRC status currently needed by the service is CELL-DCH or CELL-FACH.

With reference to the third possible implementation manner of the third aspect, in a fourth possible implementation manner of the third aspect, the processor is specifically configured to:

when the current processing of the service is performed, determine the time to trigger interval between the current time to trigger and the next time to trigger of the service according to the historical time to trigger interval of the service; and determine, according to the historical usage duration of the high speed channel in each processing of the service, the usage duration of the high speed channel in the current processing of the service;

when the processing of each action in the service is performed, determine whether the action needs to use the high speed channel;

if the action does not need to use the high speed channel, determine whether the time to trigger interval between the current time to trigger and the next time to trigger of the service is greater than the sum of the usage duration of the high speed channel in the current processing of the service and preset duration of an inactivity timer;

if greater than, determine that the RRC status currently needed by the service is CELL-FACH; and

if not greater than, determine that the RRC status currently needed by the service is CELL-DCH.

With reference to the third possible implementation manner of the third aspect, in a fifth possible implementation manner of the third aspect, the processor is specifically configured to: when the current processing of the service is performed, determine the time to trigger interval between the current time to trigger and the next time to trigger of the service according to the historical time to trigger interval of the service; determine, according to the historical usage duration of the high speed channel in each processing of the service, the usage duration of the high speed channel in the current processing of the service; and determine whether the time to trigger interval between the current time to trigger and the next time to trigger of the service is greater than the sum of the usage duration of the high speed channel in the current processing of the service and preset duration of an inactivity timer, and obtain a determining result;
when the processing of each action in the service is performed, determine whether the action needs to use the high speed channel;
acquire the determining result if the action does not need to use the high speed channel; and
determine, according to the determining result, that the RRC status currently needed by the service is CELL-DCH or CELL-FACH.

With reference to the third aspect, and/or the first possible implementation manner of the third aspect, and/or the second possible implementation manner of the third aspect, and/or the third possible implementation manner of the third aspect, and/or the fourth possible implementation manner of the third aspect, and/or the fifth possible implementation manner of the third aspect, in a sixth possible implementation manner of the third aspect, the processor is further configured to:

determine an RRC status of a UE according to RRC statuses currently needed by services.

With reference to the sixth possible implementation manner of the third aspect, in a seventh possible implementation manner of the third aspect, the processor is further specifically configured to:

determine that a highest RRC status among the RRC statuses currently needed by the services is the RRC status of the UE.

With reference to the third aspect, and/or the first possible implementation manner of the third aspect, and/or the second possible implementation manner of the third aspect, and/or the third possible implementation manner of the third aspect, and/or the fourth possible implementation manner of the third aspect, and/or the fifth possible implementation manner of the third aspect, and/or the sixth possible implementation manner of the third aspect, and/or the seventh possible implementation manner of the third aspect, in an eighth possible implementation manner of the third aspect, the processor is specifically configured to:

calculate the time to trigger interval between the current time to trigger and the next time to trigger of the service by using a formula pageInterval (In+1)=a×pageInterval (In-1)+(1-a)×pageInterval (In), where:

pageInterval (In+1) indicates the time to trigger interval between the current time to trigger and the next time to trigger of the service; pageInterval (In) indicates a time interval between a previous time to trigger and the current time to trigger of the service; pageInterval (In-1) indicates a time interval between a time to trigger previous to the previous time to trigger and the previous time to trigger of the service; a is a coefficient, and $0 < a < 1$.

With reference to the third possible implementation manner of the third aspect, and/or the fourth possible implementation manner of the third aspect, and/or the fifth possible implementation manner of the third aspect, and/or the sixth possible implementation manner of the third aspect, and/or the seventh possible implementation manner of the third aspect, and/or the eighth possible implementation manner of the third aspect, in a ninth possible implementation manner of the third aspect, the processor is specifically configured to:

calculate the usage duration of the high speed channel in the current processing of the service by using a formula pageDuration(Dn)=b×pageDuration (Dn-2)+(1-b)× pageDuration(Dn-1), where:

pageDuration(Dn) indicates the usage duration of the high speed channel in the current processing of the service; pageDuration(Dn-1) indicates usage duration of a high speed channel in previous processing of the service; pageDuration(Dn-2) indicates usage duration of a high speed channel in processing previous to the previous processing of the service; b is a coefficient, and $0 < b < 1$.

With reference to the third aspect, and/or the first possible implementation manner of the third aspect, and/or the second possible implementation manner of the third aspect, and/or the third possible implementation manner of the third aspect, and/or the fourth possible implementation manner of the third aspect, and/or the fifth possible implementation manner of the third aspect, and/or the sixth possible implementation manner of the third aspect, and/or the seventh possible implementation manner of the third aspect, and/or the eighth possible implementation manner of the third aspect, and/or the ninth possible implementation manner of the third aspect, in a tenth possible implementation manner of the third aspect, the device further includes: a transceiver, configured to indicate the RRC status of the UE that is determined by the processor to a radio network device.

With reference to the tenth possible implementation manner of the third aspect, in an eleventh possible implementation manner of the third aspect, the transceiver is further specifically configured to:

indicate the RRC status of the UE to the radio network device by using an open API provided by the radio network device; or
send the RRC status of the UE to the radio network device by carrying the RRC status of the UE in an SCRI message.

In the embodiments of the present invention, when current processing of a service is performed, a time to trigger interval between a current time to trigger and a next time to trigger of the service is determined according to a historical time to trigger interval of the service; when processing of each action in the service is performed, it is determined whether the action needs to use a high speed channel; if the action does not need to use a high speed channel, it is determined, according to the time to trigger interval between the current time to trigger and the next time to trigger of the service, that an RRC status currently needed by the service is CELL-DCH or CELL-FACH. Therefore, in the embodiments of the present invention, it is determined, according to the time to trigger interval between the current time to trigger and the next time to trigger of the service, that the RRC status currently needed by the service is CELL-DCH or CELL-FACH, and an RRC status transition may be performed without dependence on timeouts of a time to trigger timer and an inactivity timer. Therefore, a problem of wasting radio network resources and electric energy of a terminal that is caused by an excessively long or excessively short time set in the time to trigger timer and the inactivity timer does not exist, thereby reducing wastes of the radio network resources and the electric energy of the terminal.

**BRIEF DESCRIPTION OF DRAWINGS**

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a schematic diagram of a first embodiment of an RRC status control method according to the present invention;
FIG. 2 is a schematic diagram of a second embodiment of an RRC status control method according to the present invention;
FIG. 3 is a schematic diagram of a first embodiment of an RRC status control apparatus according to the present invention;
FIG. 3A is a schematic diagram of a second embodiment of an RRC status control apparatus according to the present invention;
FIG. 3B is a schematic diagram of a third embodiment of an RRC status control apparatus according to the present invention; and
FIG. 4 is a schematic structural diagram of an RRC status control device according to the present invention.

**DESCRIPTION OF EMBODIMENTS**

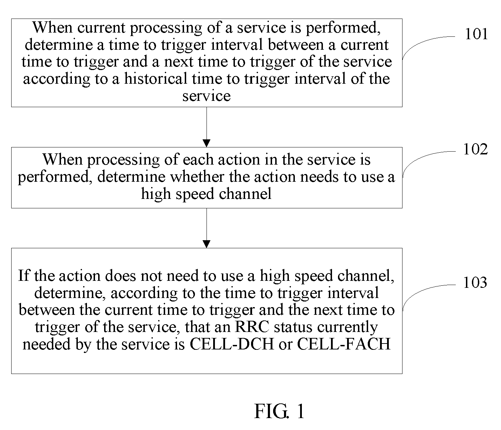

To enable a person skilled in the art to better understand technical solutions in embodiments of the present invention, and make the foregoing objectives, features, and advantages of the embodiments of the present invention clearer and more comprehensible, the following describes the technical solutions of the embodiments of the present invention in detail with reference to accompanying drawings.
Refer to FIG. 1, which is a schematic diagram of a first embodiment of an RRC status control method according to the present invention. The method may be applied to a UE, a radio network device, a core network, an application server, or the like. The radio network device includes a base station, an RNC, and the like. The method includes:

Step 101: When current processing of a service is performed, determine a time to trigger interval between a current time to trigger and a next time to trigger of the service according to a historical time to trigger interval of the service;

Step 102: When processing of each action in the service is performed, determine whether the action needs to use a high speed channel; and

Step 103: If the action does not need to use a high speed channel, determine, according to the time to trigger interval between the current time to trigger and the next time to trigger of the service, that an RRC status currently needed by the service is CELL-DCH or CELL-FACH.

In this embodiment, it is determined, according to the time to trigger interval between the current time to trigger and the next time to trigger of the service, that the RRC status currently needed by the service is CELL-DCH or CELL-FACH, and an RRC status transition may be performed without dependence on timeouts of a time to trigger timer and an inactivity timer. Therefore, a problem of wasting radio network resources and electric energy of a terminal that is caused by an excessively long or excessively short time set in the time to trigger timer and the inactivity timer does not exist, thereby reducing wastes of the radio network resources and the electric energy of the terminal.

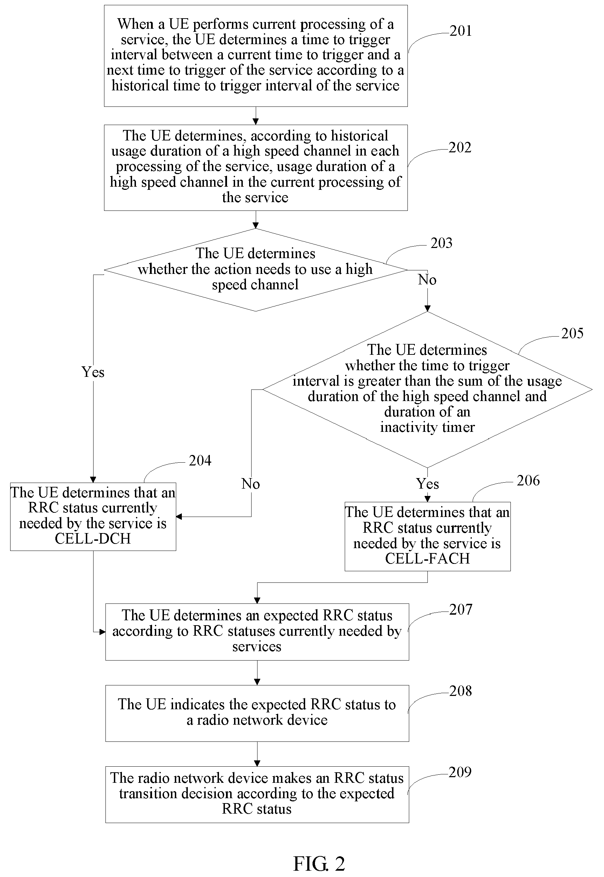

Refer to FIG. 2, which is a schematic diagram of a second embodiment of an RRC status control method according to the present invention. The method may also be applicable to a device, such as a UE, a radio network device, a core network, or an application server, that controls an RRC status of a UE, where the radio network device may include a network side device, such as an RNC. That the method is applied to a UE is used as an example, and the method includes:

Step 201: When the UE performs current processing of a service, the UE determines a time to trigger interval between a current time to trigger and a next time to trigger of the service according to a historical time to trigger interval of the service.

Generally, a time to trigger of a service refers to a time at which a user or a device starts the service. That the service is web browsing is used as an example. Triggering of the service is implemented by clicking a web link by a user, and the time to trigger of the service is a time at which the user clicks the web link.

A time to trigger interval of a service refers to an interval between a time to trigger and its adjacent time to trigger of the service. In a practical application, for each service, the UE may store n1 historical time to trigger intervals of the service that are nearest to a current time. The n1 is a natural number, and a specific value of the n1 may be independently set in the practical application. For example, when the time to trigger interval between the current time to trigger and the next time to trigger of the service is calculated by using the following formula 1 in the practical application, the value of the n1 may be 2.

Optionally, in this step, the time to trigger interval between the current time to trigger and the next time to trigger of the service may be calculated by using the following formula 1:

$$\text{pageInterval } (In+1) = a \times \text{pageInterval } (In-1) + (1-a) \times \text{pageInterval } (In); \quad (1)$$

where pageInterval (In+1) indicates the time to trigger interval between the current time to trigger and the next time to trigger of the service; pageInterval (In) indicates a time interval between a previous time to trigger and the current time to trigger of the service; pageInterval (In-1) indicates a time interval between a time to trigger previous to the previous time to trigger and the previous time to trigger of the service; a is a coefficient, and $0 < a < 1$.

Step 202: The UE determines, according to historical usage duration of a high speed channel in each processing of the service, usage duration of a high speed channel in the current processing of the service.

In a service, multiple actions are included, and different actions may need a same channel or different channels. The web browsing is used as an example, and it may include two actions: page download and Transmission Control Protocol (TCP, Transmission Control Protocol) connection release after the download is complete. The page download generally needs a relatively high download rate, and therefore is generally completed by using a high speed channel; however, it generally takes a few seconds or even more than ten seconds to completely finish release of all TCP connections, and therefore the TCP connection release may be completed by using a low speed channel. Usage duration of a high speed channel in each processing of the service refers to a length of data transmission time in which a high speed channel is used for action in the current processing of the service. That the service is the web browsing is used as an example, and usage duration of a high speed channel in a web browsing is download duration of a page data packet in a page download process of the web browsing. Historical usage duration of a high speed channel in each processing of the service refers to usage duration of a high speed channel in each completed processing of the service, such as usage duration of a high speed channel in previous processing of the service or usage duration of a high speed channel in processing previous to the previous processing of the service.

In the practical application, for each service, the UE may store usage duration of a high speed channel in the latest n2 times of processing of the service as the historical usage duration. The n2 is a natural number, and a specific value of the n2 may be independently set in the practical application. For example, when the usage duration of the high speed channel in the current processing of the service is calculated by using the following formula 2 in the practical application, the value of the n2 may be 2.

When the value of the n2 is 1, in this step, the usage duration of the high speed channel in the previous processing of the service may be directly determined as the usage duration of the high speed channel in the current processing of the service.

When the value of the n2 is 2, optionally, in this step, the usage duration of the high speed channel in the current processing of the service may be calculated by using the following formula 2:

$$\text{pageDuration}(Dn) = b \times \text{pageDuration}(Dn\text{-}2) + (1\text{-}b) \times \text{pageDuration}(Dn\text{-}1); \ (2)$$

where pageDuration(Dn) indicates the usage duration of the high speed channel in the current processing of the service; pageDuration(Dn-1) indicates the usage duration of the high speed channel in the previous processing of the service; pageDuration(Dn-2) indicates usage duration of a high speed channel in the processing previous to the previous processing of the service; b is a coefficient, and 0 <b <1.

Step 203: When the UE performs processing of each action in the service, the UE determines whether the action needs to use a high speed channel; if a high speed channel needs to be used, step 204 is performed; if no high speed channel needs to be used, step 205 is performed.

In the practical application, information about that a high speed channel or a low speed channel is needed theoretically by each action in the service may be stored in advance; then, in this step, it may be determined, according to the information stored in advance, whether the action needs to use a high speed channel.

That the service is the web browsing is still used as an example, and that the page download is corresponding to a high speed channel and the TCP connection release is corresponding to a low speed channel may be stored. Then, if a processed action is the page download, the UE determines that the action needs to use a high speed channel; if the processed action is the TCP connection release, the UE determines that the action does not need to use a high speed channel.

Step 204: The UE determines that an RRC status currently needed by the service is CELL-DCH; step 207 is performed.

Step 205: The UE determines whether the time to trigger interval between the current time to trigger and the next time to trigger of the service is greater than the sum of the usage duration of the high speed channel in the current processing of the service and preset duration of an inactivity timer; if greater than, step 206 is performed; if not greater than, step 204 is performed.

Step 206: The UE determines that the RRC status currently needed by the service is CELL-FACH; step 207 is performed.

Step 207: The UE determines an expected RRC status according to RRC statuses currently needed by services.

The expected RRC status is an RRC status which the UE is hoped to be in.

Optionally, a highest RRC state among the RRC statuses currently needed by the services may be determined as the expected RRC status.

A sequence of three RRC statuses of the UE in descending order is: Cell-DCH, Cell-FACH, and Cell/URA-PCH.

Step 208: The UE indicates the expected RRC status to a radio network device.

Optionally, the expected RRC status may be sent to the radio network device by carrying the expected RRC status in a signaling connection release indication (SCRI, Signaling Connection Release Indication) message.

Specifically, in addition to a UE Requested PS Data Session End (UE Requested PS Data Session End) state, a UE Requested PS Data Low Rate (UE Requested PS Data Low Rate) state may be added to a signaling connection release indication cause (signaling Connection Release Indication Cause) in the SCRI message, so as to indicate the expected RRC status.

Step 209: The radio network device makes an RRC status transition decision according to the expected RRC status.

Specifically, the radio network device may decide, according to the expected RRC status, whether to perform an RRC status transition. For example, a current RRC status of the UE is CELL-DCH, and the expected RRC status is CELL-FACH; then the radio network device may directly decide to change the RRC status of the UE from CELL-DCH to CELL-FACH, without a need to wait for timeouts of a time to trigger timer and an inactivity timer before deciding to change the RRC status of the UE from CELL-DCH to CELL-FACH.

Alternatively, the radio network device may also make the RRC status transition decision according to the expected RRC status and with reference to other factors such as a radio link control (RLC) buffer threshold and a timeout of the inactivity timer, which is not limited herein.

When step 201 to step 208 are performed by the radio network device, step 208 may be canceled.

When step 201 to step 208 are performed by a core network or an application server, in step 208, the core network or the application server may indicate the expected RRC status to the radio network device by using an open API provided by the radio network device.

Optionally, after step 202 and before the UE determines that an action in the service does not need to use a high speed channel for the first time in step 203, the UE may determine in advance whether the time to trigger interval between the current time to trigger and the next time to trigger of the service is greater than the sum of the usage duration of the high speed channel in the current processing of the service and the preset duration of the inactivity timer, and obtain a determining result of the determining; then, when the UE determines again that an action in the service does not need to use a high speed channel in step 203, the UE may skip performing the determining step in step 205 and directly acquire the determining result, and determine to perform step 206 or step 204 according to the determining result.

In addition, step 202 is an optional step. When step 202 is not performed, the rest processing procedure remains unchanged, and only step 205 is modified into: The UE determines whether the time to trigger interval between the current time to trigger and the next time to trigger of the service is greater than preset duration of an inactivity timer.

In this embodiment, it is determined, according to the time to trigger interval between the current time to trigger and the next time to trigger of the service and the usage duration of the high speed channel in the current processing of the service, that the RRC status currently needed by the service is CELL-DCH or CELL-FACH, and an RRC status transition may be performed without dependence on timeouts of a time to trigger timer and an inactivity timer. Therefore, a problem of wasting radio network resources and electric energy of a terminal that is caused by an excessively long or excessively short time set in the time to trigger timer and the inactivity timer does not exist, thereby reducing wastes of the radio network resources and the electric energy of the terminal.

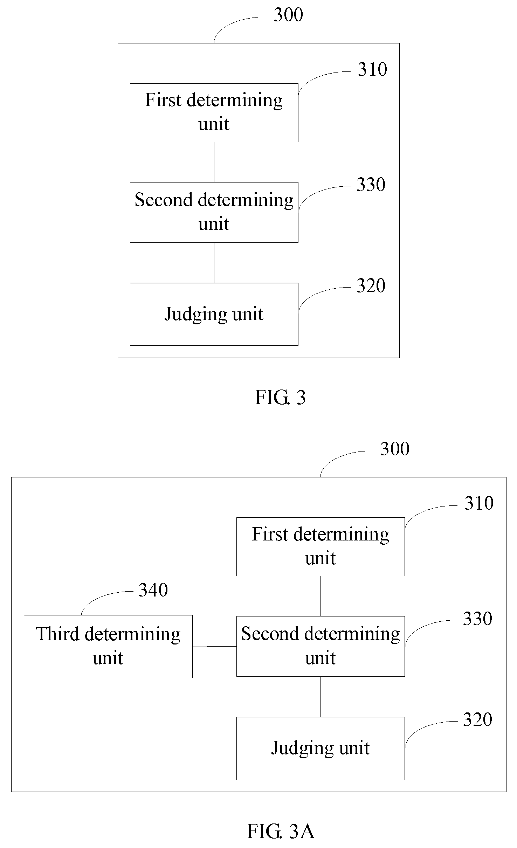

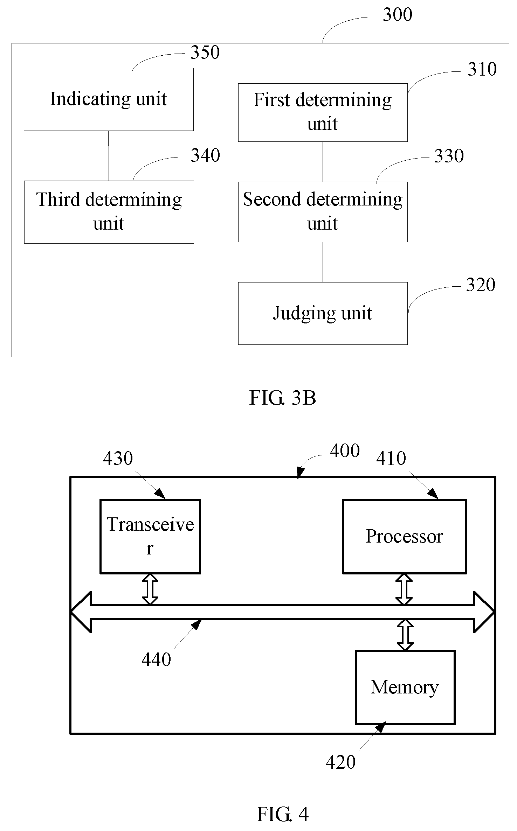

Refer to FIG. 3, which is a schematic structural diagram of an RRC status control apparatus according to an embodiment of the present invention. The apparatus may be disposed on a device, such as a UE, a radio network device, a core network, or an application server, that controls an RRC status of a UE. The apparatus 300 includes:

a first determining unit 310, configured to: when current processing of a service is performed, determine a time to trigger interval between a current time to trigger and a next time to trigger of the service according to a historical time to trigger interval of the service;

a judging unit 320, configured to: when processing of each action in the service is performed, determine whether the action needs to use a high speed channel; and

a second determining unit 330, configured to: if the judging unit 320 determines that the action does not need to use a high speed channel, determine, according to the time to trigger interval between the current time to trigger and the next time to trigger of the service that is determined by the first determining unit 310, that an RRC status currently needed by the service is CELL-DCH or CELL-FACH.

In a first possible implementation manner, the second determining unit 330 may be specifically configured to:

determine whether the time to trigger interval between the current time to trigger and the next time to trigger of the service is greater than preset duration of an inactivity timer;

if greater than, determine that the RRC status currently needed by the service is CELL-FACH; and

if not greater than, determine that the RRC status currently needed by the service is CELL-DCH.

In a second possible implementation manner, the first determining unit 310 may be further configured to: determine whether the time to trigger interval between the current time to trigger and the next time to trigger of the service is greater than preset duration of an inactivity timer, and obtain a determining result; and

accordingly, the second determining unit 330 may be specifically configured to: if the judging unit determines that the action does not need to use a high speed channel, acquire the determining result obtained by the first determining unit, and determine, according to the determining result, that the RRC status currently needed by the service is CELL-DCH or CELL-FACH.

In a third possible implementation manner, the first determining unit 310 may be further configured to: determine, according to historical usage duration of a high speed channel in each processing of the service, usage duration of a high speed channel in the current processing of the service; and

accordingly, the second determining unit 330 may be specifically configured to: if the judging unit 320 determines that the action does not need to use a high speed channel, determine, according to the time to trigger interval between the current time to trigger and the next time to trigger of the service and the usage duration of the high speed channel in the current processing of the service that are determined by the first determining unit 310, that the RRC status currently needed by the service is CELL-DCH or CELL-FACH.

Optionally, the second determining unit 340 may be specifically configured to:

determine whether the time to trigger interval between the current time to trigger and the next time to trigger of the service is greater than the sum of the usage duration of the high speed channel in the current processing of the service and preset duration of an inactivity timer;
if greater than, determine that the RRC status currently needed by the service is CELL-FACH; and
if not greater than, determine that the RRC status currently needed by the service is CELL-DCH.

Optionally, the first determining unit 310 may be further configured to: determine whether the time to trigger interval between the current time to trigger and the next time to trigger of the service is greater than the sum of the usage duration of the high speed channel in the current processing of the service and preset duration of an inactivity timer, and obtain a determining result; and

accordingly, the second determining unit 330 may be specifically configured to: if the judging unit determines that the action does not need to use a high speed channel, acquire the determining result obtained by the first determining unit, and determine, according to the determining result, that the RRC status currently needed by the service is CELL-DCH or CELL-FACH.

Optionally, referring to FIG. 3A, the apparatus 300 may further include:

a third determining unit 340, configured to determine an RRC status of a UE according to RRC statuses currently needed by services and determined by the second determining unit 330.

Optionally, the third determining unit 340 may be specifically configured to:

determine that a highest RRC status among the RRC statuses currently needed by the services is the RRC status of the UE.

Optionally, the first determining unit 310 may be specifically configured to:

calculate the time to trigger interval between the current time to trigger and the next time to trigger of the service by using a formula pageInterval (In+1)=a×pageInterval (In-1)+(1-a)×pageInterval (In), where:

pageInterval (In+1) indicates the time to trigger interval between the current time to trigger and the next time to trigger of the service; pageInterval (In) indicates a time interval between a previous time to trigger and the current time to trigger of the service; pageInterval (In-1) indicates a time interval between a time to trigger previous to the previous time to trigger and the previous time to trigger of the service; a is a coefficient, and 0 < a < 1.

Optionally, the first determining unit 310 may be specifically configured to:

calculate the usage duration of the high speed channel in the current processing of the service by using a formula pageDuration(Dn)=b×pageDuration (Dn-2)+(1-b)× pageDuration(Dn-1), where:

pageDuration(Dn) indicates the usage duration of the high speed channel in the current processing of the service; pageDuration(Dn-1) indicates usage duration of a high speed channel in previous processing of the service; pageDuration(Dn-2) indicates usage duration of a high speed channel in processing previous to the previous processing of the service; b is a coefficient, and 0 < b < 1.

Optionally, referring to FIG. 3B, the apparatus 300 may further include:

an indicating unit 350, configured to indicate the RRC status of the UE that is determined by the third determining unit 340 to a radio network device.
Optionally, the indicating unit 350 may be specifically configured to:
indicate the RRC status of the UE to the radio network device by using an open API provided by the radio network device; or
send the RRC status of the UE to the radio network device by carrying the RRC status of the UE in an SCRI message.

In this embodiment, it is determined, according to a time to trigger interval between a current time to trigger and a next time to trigger of the service, that an RRC status currently needed by the service is CELL-DCH or CELL-FACH, and an RRC status transition may be performed without dependence on timeouts of a time to trigger timer and an inactivity timer. Therefore, a problem of wasting radio network resources and electric energy of a terminal that is caused by an excessively long or excessively short time set in the time to trigger timer and the inactivity timer does not exist, thereby reducing wastes of the radio network resources and the electric energy of the terminal.

Refer to FIG. 4, which is a structural diagram of an RRC status control device according to an embodiment of the present invention. The device may be a UE, a radio network device, a core network, an application server, or the like. The device 400 includes: a processor 410, a memory 420, a transceiver 430, and a bus 440.

The processor 410, the memory 420, and the transceiver 430 are connected to each other by using the bus 440, and the bus 440 may be an ISA bus, a PCI bus, an EISA bus, or the like. The bus may be classified into an address bus, a data bus, a control bus, and the like. For ease of indication, only one bold line is used in FIG. 4 to represent the bus, which, however, does not indicate that there is only one bus or one type of bus.

The memory 420 is configured to store a program. Specifically, the program may include program code, where the program code includes a computer operation instruction. The memory 420 may include a high-speed RAM memory, and may further include a non-volatile memory (non-volatile memory), for example, at least one disk memory.

The transceiver 430 is configured to connect to another device and communicate with the another device.

The processor 410 executes the program code and is configured to: when current processing of a service is performed, determine a time to trigger interval between a current time to trigger and a next time to trigger of the service according to a historical time to trigger interval of the service; when processing of each action in the service is performed, determine whether the action needs to use a high speed channel; and if the action does not need to use a high speed channel, determine, according to the time to trigger interval between the current time to trigger and the next time to trigger of the service, that an RRC status currently needed by the service is CELL-DCH or CELL-FACH.

In a first possible implementation manner, the processor 410 may be specifically configured to:

when the current processing of the service is performed, determine the time to trigger interval between the current time to trigger and the next time to trigger of the service according to the historical time to trigger interval of the service;
when the processing of each action in the service is performed, determine whether the action needs to use the high speed channel;
if the action does not need to use the high speed channel, determine whether the time to trigger interval between the current time to trigger and the next time to trigger of the service is greater than preset duration of an inactivity timer;
if greater than, determine that the RRC status currently needed by the service is CELL-FACH; and
if not greater than, determine that the RRC status currently needed by the service is CELL-DCH.

In a second possible implementation manner, the processor 410 may be specifically configured to: when the current processing of the service is performed, determine the time to trigger interval between the current time to trigger and the next time to trigger of the service according to the historical time to trigger interval of the service; and determine whether the time to trigger interval between the current time to trigger and the next time to trigger of the service is greater than preset duration of an inactivity timer, and obtain a determining result;
when the processing of each action in the service is performed, determine whether the action needs to use the high speed channel;
acquire the determining result if the action does not need to use the high speed channel; and
determine, according to the determining result, that the RRC status currently needed by the service is CELL-DCH or CELL-FACH.

In a third possible implementation manner, the processor 410 may be specifically configured to: when the current processing of the service is performed, determine the time to trigger interval between the current time to trigger and the next time to trigger of the service according to the historical time to trigger interval of the service; and determine, according to historical usage duration of a high speed channel in each processing of the service, usage duration of a high speed channel in the current processing of the service;
when the processing of each action in the service is performed, determine whether the action needs to use the high speed channel; and
if the action does not need to use the high speed channel, determine, according to the time to trigger interval between the current time to trigger and the next time to trigger of the service and the usage duration of the high speed channel in the current processing of the service, that the RRC status currently needed by the service is CELL-DCH or CELL-FACH.

Optionally, the processor 410 may be specifically configured to:

when the current processing of the service is performed, determine the time to trigger interval between the current time to trigger and the next time to trigger of the service according to the historical time to trigger interval of the service; and determine, according to the historical usage duration of the high speed channel in each processing of the service, the usage duration of the high speed channel in the current processing of the service;

when the processing of each action in the service is performed, determine whether the action needs to use the high speed channel;

if the action does not need to use the high speed channel, determine whether the time to trigger interval between the current time to trigger and the next time to trigger of the service is greater than the sum of the usage duration of the high speed channel in the current processing of the service and preset duration of an inactivity timer;

if greater than, determine that the RRC status currently needed by the service is CELL-FACH; and

if not greater than, determine that the RRC status currently needed by the service is CELL-DCH.

Optionally, the processor 410 may be specifically configured to:

when the current processing of the service is performed, determine the time to trigger interval between the current time to trigger and the next time to trigger of the service according to the historical time to trigger interval of the service; determine, according to the historical usage duration of the high speed channel in each processing of the service, the usage duration of the high speed channel in the current processing of the service; and determine whether the time to trigger interval between the current time to trigger and the next time to trigger of the service is greater than the sum of the usage duration of the high speed channel in the current processing of the service and preset duration of an inactivity timer, and obtain a determining result;

when the processing of each action in the service is performed, determine whether the action needs to use the high speed channel;

acquire the determining result if the action does not need to use the high speed channel; and

determine, according to the determining result, that the RRC status currently needed by the service is CELL-DCH or CELL-FACH.

Optionally, the processor 410 may be further configured to:

determine an RRC status of a UE according to RRC statuses currently needed by services.

Optionally, the processor 410 may be further specifically configured to:

determine that a highest RRC status among the RRC statuses currently needed by the services is the RRC status of the UE.

Optionally, the processor 410 may be specifically configured to:

calculate the time to trigger interval between the current time to trigger and the next time to trigger of the service by using a formula pageInterval (In+1)=a×pageInterval (In-1)+(1-a)×pageInterval (In), where:

pageInterval (In+1) indicates the time to trigger interval between the current time to trigger and the next time to trigger of the service; pageInterval (In) indicates a time interval between a previous time to trigger and the current time to trigger of the service; pageInterval (In-1) indicates a time interval between a time to trigger previous to the previous time to trigger and the previous time to trigger of the service; a is a coefficient, and 0 < a <1.

Optionally, the processor 410 may be specifically configured to:

calculate the usage duration of the high speed channel in the current processing of the service by using a formula pageDuration(Dn)=b×pageDuration (Dn-2)+(1-b)× pageDuration(Dn-1), where:

pageDuration(Dn) indicates the usage duration of the high speed channel in the current processing of the service; pageDuration(Dn-1) indicates usage duration of a high speed channel in previous processing of the service; pageDuration(Dn-2) indicates usage duration of a high speed channel in processing previous to the previous processing of the service; b is a coefficient, and 0 < b <1.

Optionally, the transceiver 430 may be further configured to:

indicate the RRC status of the UE that is determined by the processor 410 to a radio network device.

Optionally, the transceiver 430 may be further specifically configured to:

indicate the RRC status of the UE to the radio network device by using an open API provided by the radio network device; or
send the RRC status of the UE to the radio network device by carrying the RRC status of the UE in an SCRI message.

In this embodiment, it is determined, according to the time to trigger interval between the current time to trigger and the next time to trigger of the service and the usage duration of the high speed channel in the current processing of the service, that the RRC status currently needed by the service is CELL-DCH or CELL-FACH, and an RRC status transition may be performed without dependence on timeouts of a time to trigger timer and an inactivity timer. Therefore, a problem of wasting radio network resources and electric energy of a terminal that is caused by an excessively long or excessively short time set in the time to trigger timer and the inactivity timer does not exist, thereby reducing wastes of the radio network resources and the electric energy of the terminal.

A person skilled in the art may clearly understand that, the technique in the embodiments of the present invention may be implemented through software and a necessary general hardware platform. Based on such an understanding, the technical solutions of the present invention essentially or the part contributing to the prior art may be implemented in a form of a software product. The software product is stored in a storage medium, such as a ROM/RAM, a hard disk, or an optical disc, and includes several instructions for instructing a computer device (which may be a personal computer, a server, or a network device) to perform the methods described in the embodiments or some parts of the embodiments of the present invention.

The embodiments of the present specification are described in a progressive manner. The same or similar parts of the embodiments can be referenced mutually. The focus of each embodiment is placed on a difference from other embodiments. Particularly, for a system embodiment, because it is basically similar to the method embodiment, the system embodiment is described briefly, and the relevant part may be obtained with reference to the description of the corresponding part in the method embodiment.

The foregoing implementation manners of the present invention do not constitute any limitation on the protection scope of the present invention. Any modification, equivalent replacement, and improvement made without departing from the spirit and principle of the present invention shall fall within the protection scope of the present invention.

**Claims**

1. An RRC status control method, comprising:

   when current processing of a service is performed, determining a time to trigger interval between a current time to trigger and a next time to trigger of the service according to a historical time to trigger interval of the service;
   when processing of each action in the service is performed, determining whether the action needs to use a high speed channel; and
   if the action does not need to use a high speed channel, determining, according to the time to trigger interval between the current time to trigger and the next time to trigger of the service, that an RRC status currently needed by the service is CELL-DCH or CELL-FACH.

2. The method according to claim 1, wherein the determining, according to the time to trigger interval between the current time to trigger and the next time to trigger of the service, that an RRC status currently needed by the service is CELL-DCH or CELL-FACH comprises:

   determining whether the time to trigger interval between the current time to trigger and the next time to trigger of the service is greater than preset duration of an inactivity timer;
   if the time to trigger interval between the current time to trigger and the next time to trigger of the service is greater than the preset duration of the inactivity timer, determining that the RRC status currently needed by the service is CELL-FACH; and
   if the time to trigger interval between the current time to trigger and the next time to trigger of the service is not greater than the preset duration of the inactivity timer, determining that the RRC status currently needed by the service is CELL-DCH.

3. The method according to claim 1, wherein after the determining a time to trigger interval between a current time to trigger and a next time to trigger of the service, the method further comprises:

determining whether the time to trigger interval between the current time to trigger and the next time to trigger of the service is greater than preset duration of an inactivity timer, and obtaining a determining result; and wherein the determining, according to the time to trigger interval between the current time to trigger and the next time to trigger of the service, that an RRC status currently needed by the service is CELL-DCH or CELL-FACH comprises:

acquiring the determining result; and determining, according to the determining result, that the RRC status currently needed by the service is CELL-DCH or CELL-FACH.

4. The method according to claim 1, further comprising: determining, according to historical usage duration of a high speed channel in each processing of the service, usage duration of a high speed channel in the current processing of the service; and wherein when it is determined that the RRC status currently needed by the service is CELL-DCH or CELL-FACH, determining, according to the usage duration of the high speed channel in the current processing of the service, that the RRC status currently needed by the service is CELL-DCH or CELL-FACH.

5. The method according to claim 4, wherein the determining, according to the time to trigger interval between the current time to trigger and the next time to trigger of the service, that an RRC status currently needed by the service is CELL-DCH or CELL-FACH comprises:

determining whether the time to trigger interval between the current time to trigger and the next time to trigger of the service is greater than the sum of the usage duration of the high speed channel in the current processing of the service and preset duration of an inactivity timer; if the time to trigger interval between the current time to trigger and the next time to trigger of the service is greater than the sum of the usage duration of the high speed channel in the current processing of the service and the preset duration of the inactivity timer, determining that the RRC status currently needed by the service is CELL-FACH; and if the time to trigger interval between the current time to trigger and the next time to trigger of the service is not greater than the sum of the usage duration of the high speed channel in the current processing of the service and the preset duration of the inactivity timer, determining that the RRC status currently needed by the service is CELL-DCH.

6. The method according to claim 4, wherein after the determining a time to trigger interval between a current time to trigger and a next time to trigger of the service and the determining usage duration of a high speed channel in the current processing of the service, the method further comprises:

determining whether the time to trigger interval between the current time to trigger and the next time to trigger of the service is greater than the sum of the usage duration of the high speed channel in the current processing of the service and preset duration of an inactivity timer, and obtaining a determining result; and wherein the determining, according to the time to trigger interval between the current time to trigger and the next time to trigger of the service, that an RRC status currently needed by the service is CELL-DCH or CELL-FACH comprises:

acquiring the determining result; and determining, according to the determining result, that the RRC status currently needed by the service is CELL-DCH or CELL-FACH.

7. The method according to any one of claims 1 to 6, further comprising:

determining an RRC status of a UE according to RRC statuses currently needed by services.

8. The method according to claim 7, wherein the determining an RRC status of a UE according to RRC statuses currently needed by services comprises:

determining that a highest RRC status among the RRC statuses currently needed by the services is the RRC status of the UE.

9. The method according to any one of claims 1 to 8, wherein the determining a time to trigger interval between a current time to trigger and a next time to trigger of the service according to a historical time to trigger interval of the service comprises:

calculating the time to trigger interval between the current time to trigger and the next time to trigger of the service by using a formula:

$$pageInterval\ (In+1)=a\times pageInterval\ (In-1)+(1-a)\times pageInterval\ (In),$$

wherein:

pageInterval (In+1) indicates the time to trigger interval between the current time to trigger and the next time to trigger of the service; pageInterval (In) indicates a time interval between a previous time to trigger and the current time to trigger of the service; pageInterval (In-1) indicates a time interval between a time to trigger previous to the previous time to trigger and the previous time to trigger of the service; a is a coefficient, and 0 < a <1.

10. The method according to any one of claims 4 to 9, wherein the determining, according to historical usage duration of a high speed channel in each processing of the service, usage duration of a high speed channel in the current processing of the service comprises:

calculating the usage duration of the high speed channel in the current processing of the service by using a formula:

$$pageDuration(Dn)=b\times pageDuration\ (Dn-2)+(1-b)\times pageDuration(Dn-1),$$

wherein:

pageDuration(Dn) indicates the usage duration of the high speed channel in the current processing of the service; pageDuration(Dn-1) indicates usage duration of a high speed channel in previous processing of the service; pageDuration(Dn-2) indicates usage duration of a high speed channel in processing previous to the previous processing of the service; b is a coefficient, and 0 < b <1.

11. The method according to any one of claims 1 to 10, further comprising:

indicating the RRC status of the UE to a radio network device.

12. The method according to claim 11, wherein the indicating the RRC status of the UE to a radio network device comprises:

indicating the RRC status of the UE to the radio network device by using an open API provided by the radio network device; or
sending the RRC status of the UE to the radio network device by carrying the RRC status of the UE in an SCRI message.

13. An RRC status control apparatus, comprising:

a first determining unit, configured to: when current processing of a service is performed, determine a time to trigger interval between a current time to trigger and a next time to trigger of the service according to a historical time to trigger interval of the service;
a judging unit, configured to: when processing of each action in the service is performed, determine whether the action needs to use a high speed channel; and
a second determining unit, configured to: if the judging unit determines that the action does not need to use a high speed channel, determine, according to the time to trigger interval between the current time to trigger and the next time to trigger of the service that is determined by the first determining unit, that an RRC status currently needed by the service is CELL-DCH or CELL-FACH.

**14.** The apparatus according to claim 13, wherein the second determining unit is specifically configured to:

determine whether the time to trigger interval between the current time to trigger and the next time to trigger of the service is greater than preset duration of an inactivity timer;
if greater than, determine that the RRC status currently needed by the service is CELL-FACH; and
if not greater than, determine that the RRC status currently needed by the service is CELL-DCH.

**15.** The apparatus according to claim 13, wherein the first determining unit is further configured to: determine whether the time to trigger interval between the current time to trigger and the next time to trigger of the service is greater than preset duration of an inactivity timer, and obtain a determining result; and
wherein the second determining unit is specifically configured to: if the judging unit determines that the action does not need to use a high speed channel, acquire the determining result obtained by the first determining unit, and determine, according to the determining result, that the RRC status currently needed by the service is CELL-DCH or CELL-FACH.

**16.** The apparatus according to claim 13, wherein the first determining unit is further configured to: determine, according to historical usage duration of a high speed channel in each processing of the service, usage duration of a high speed channel in the current processing of the service; and
wherein the second determining unit is specifically configured to: if the judging unit determines that the action does not need to use a high speed channel, determine, according to the time to trigger interval between the current time to trigger and the next time to trigger of the service and the usage duration of the high speed channel in the current processing of the service that are determined by the first determining unit, that the RRC status currently needed by the service is CELL-DCH or CELL-FACH.

**17.** The apparatus according to claim 16, wherein the second determining unit is specifically configured to:

determine whether the time to trigger interval between the current time to trigger and the next time to trigger of the service is greater than the sum of the usage duration of the high speed channel in the current processing of the service and preset duration of an inactivity timer;
if greater than, determine that the RRC status currently needed by the service is CELL-FACH; and
if not greater than, determine that the RRC status currently needed by the service is CELL-DCH.

**18.** The apparatus according to claim 16, wherein the first determining unit is further configured to: determine whether the time to trigger interval between the current time to trigger and the next time to trigger of the service is greater than the sum of the usage duration of the high speed channel in the current processing of the service and preset duration of an inactivity timer, and obtain a determining result; and
wherein the second determining unit is specifically configured to: if the judging unit determines that the action does not need to use a high speed channel, acquire the determining result obtained by the first determining unit, and determine, according to the determining result, that the RRC status currently needed by the service is CELL-DCH or CELL-FACH.

**19.** The apparatus according to any one of claims 13 to 18, further comprising:

a third determining unit, configured to determine an RRC status of a UE according to RRC statuses currently needed by services and determined by the second determining unit.

**20.** The apparatus according to claim 19, wherein the third determining unit is specifically configured to:

determine that a highest RRC status among the RRC statuses currently needed by the services is the RRC status of the UE.

**21.** The apparatus according to any one of claims 13 to 20, wherein the first determining unit is specifically configured to:

calculate the time to trigger interval between the current time to trigger and the next time to trigger of the service by using a formula pageInterval (In+1)=a×pageInterval (In-1)+(1-a)×pageInterval (In), wherein:

pageInterval (In+1) indicates the time to trigger interval between the current time to trigger and the next time to trigger of the service; pageInterval (In) indicates a time interval between a previous time to trigger and the current time to trigger of the service; pageInterval (In-1) indicates a time interval between a time to trigger previous to the previous time to trigger and the previous time to trigger of the service; a is a coefficient, and 0 < a <1.

22. The apparatus according to any one of claims 16 to 21, wherein the first determining unit is specifically configured to:

calculate the usage duration of the high speed channel in the current processing of the service by using a formula pageDuration(Dn)=b×pageDuration(Dn-2)+(1-b)× pageDuration(Dn-1), wherein:

pageDuration(Dn) indicates the usage duration of the high speed channel in the current processing of the service; pageDuration(Dn-1) indicates usage duration of a high speed channel in previous processing of the service; pageDuration(Dn-2) indicates usage duration of a high speed channel in processing previous to the previous processing of the service; b is a coefficient, and 0 < b <1.

23. The apparatus according to any one of claims 13 to 22, further comprising:

an indicating unit, configured to indicate the RRC status of the UE that is determined by the third determining unit to a radio network device.

24. The apparatus according to claim 23, wherein the indicating unit is specifically configured to:

indicate the RRC status of the UE to the radio network device by using an open API provided by the radio network device; or
send the RRC status of the UE to the radio network device by carrying the RRC status of the UE in an SCRI message.

25. An RRC status control device, comprising:

a processor, configured to: when current processing of a service is performed, determine a time to trigger interval between a current time to trigger and a next time to trigger of the service according to a historical time to trigger interval of the service; when processing of each action in the service is performed, determine whether the action needs to use a high speed channel; and if the action does not need to use a high speed channel, determine, according to the time to trigger interval between the current time to trigger and the next time to trigger of the service, that an RRC status currently needed by the service is CELL-DCH or CELL-FACH.

26. The device according to claim 25, wherein the processor is specifically configured to: when the current processing of the service is performed, determine the time to trigger interval between the current time to trigger and the next time to trigger of the service according to the historical time to trigger interval of the service;
when the processing of each action in the service is performed, determine whether the action needs to use the high speed channel;
if the action does not need to use the high speed channel, determine whether the time to trigger interval between the current time to trigger and the next time to trigger of the service is greater than preset duration of an inactivity timer;
if greater than, determine that the RRC status currently needed by the service is CELL-FACH; and
if not greater than, determine that the RRC status currently needed by the service is CELL-DCH.

27. The device according to claim 25, wherein the processor is specifically configured to: when the current processing of the service is performed, determine the time to trigger interval between the current time to trigger and the next time to trigger of the service according to the historical time to trigger interval of the service; and determine whether the time to trigger interval between the current time to trigger and the next time to trigger of the service is greater than preset duration of an inactivity timer, and obtain a determining result;
when the processing of each action in the service is performed, determine whether the action needs to use the high speed channel;
acquire the determining result if the action does not need to use the high speed channel; and
determine, according to the determining result, that the RRC status currently needed by the service is CELL-DCH or CELL-FACH.

28. The device according to claim 25, wherein the processor is specifically configured to: when the current processing of the service is performed, determine the time to trigger interval between the current time to trigger and the next time to trigger of the service according to the historical time to trigger interval of the service; and determine, according to historical usage duration of a high speed channel in each processing of the service, usage duration of a high speed channel in the current processing of the service;
   when the processing of each action in the service is performed, determine whether the action needs to use the high speed channel; and
   if the action does not need to use the high speed channel, determine, according to the time to trigger interval between the current time to trigger and the next time to trigger of the service and the usage duration of the high speed channel in the current processing of the service, that the RRC status currently needed by the service is CELL-DCH or CELL-FACH.

29. The device according to claim 28, wherein the processor is specifically configured to:

   when the current processing of the service is performed, determine the time to trigger interval between the current time to trigger and the next time to trigger of the service according to the historical time to trigger interval of the service; and determine, according to the historical usage duration of the high speed channel in each processing of the service, the usage duration of the high speed channel in the current processing of the service;
   when the processing of each action in the service is performed, determine whether the action needs to use the high speed channel;
   if the action does not need to use the high speed channel, determine whether the time to trigger interval between the current time to trigger and the next time to trigger of the service is greater than the sum of the usage duration of the high speed channel in the current processing of the service and preset duration of an inactivity timer;
   if greater than, determine that the RRC status currently needed by the service is CELL-FACH; and
   if not greater than, determine that the RRC status currently needed by the service is CELL-DCH.

30. The device according to claim 28, wherein the processor is specifically configured to: when the current processing of the service is performed, determine the time to trigger interval between the current time to trigger and the next time to trigger of the service according to the historical time to trigger interval of the service; determine, according to the historical usage duration of the high speed channel in each processing of the service, the usage duration of the high speed channel in the current processing of the service; and determine whether the time to trigger interval between the current time to trigger and the next time to trigger of the service is greater than the sum of the usage duration of the high speed channel in the current processing of the service and preset duration of an inactivity timer, and obtain a determining result;
   when the processing of each action in the service is performed, determine whether the action needs to use the high speed channel;
   acquire the determining result if the action does not need to use the high speed channel; and
   determine, according to the determining result, that the RRC status currently needed by the service is CELL-DCH or CELL-FACH.

31. The device according to any one of claims 25 to 30, wherein the processor is further configured to:

   determine an RRC status of a UE according to RRC statuses currently needed by services.

32. The device according to claim 31, wherein the processor is further specifically configured to:

   determine that a highest RRC status among the RRC statuses currently needed by the services is the RRC status of the UE.

33. The device according to any one of claims 25 to 32, wherein the processor is specifically configured to:

   calculate the time to trigger interval between the current time to trigger and the next time to trigger of the service by using a formula pageInterval (In+1)=a×pageInterval (In-1)+(1-a)×pageInterval (In), wherein:

      pageInterval (In+1) indicates the time to trigger interval between the current time to trigger and the next time to trigger of the service; pageInterval (In) indicates a time interval between a previous time to trigger and the current time to trigger of the service; pageInterval (In-1) indicates a time interval between a time to trigger previous to the previous time to trigger and the previous time to trigger of the service; a is a coefficient, and 0 < a <1.

34. The device according to any one of claims 28 to 33, wherein the processor is specifically configured to:

calculate the usage duration of the high speed channel in the current processing of the service by using a formula pageDuration(Dn)=b×pageDuration(Dn-2)+(1-b)× pageDuration(Dn-1), wherein:

pageDuration(Dn) indicates the usage duration of the high speed channel in the current processing of the service; pageDuration(Dn-1) indicates usage duration of a high speed channel in previous processing of the service; pageDuration(Dn-2) indicates usage duration of a high speed channel in processing previous to the previous processing of the service; b is a coefficient, and 0 < b <1.

35. The device according to any one of claims 25 to 34, further comprising: a transceiver, configured to indicate the RRC status of the UE that is determined by the processor to a radio network device.

36. The device according to claim 35, wherein the transceiver is further specifically configured to:

indicate the RRC status of the UE to the radio network device by using an open API provided by the radio network device; or
send the RRC status of the UE to the radio network device by carrying the RRC status of the UE in an SCRI message.

When current processing of a service is performed, determine a time to trigger interval between a current time to trigger and a next time to trigger of the service according to a historical time to trigger interval of the service — 101

When processing of each action in the service is performed, determine whether the action needs to use a high speed channel — 102

If the action does not need to use a high speed channel, determine, according to the time to trigger interval between the current time to trigger and the next time to trigger of the service, that an RRC status currently needed by the service is CELL-DCH or CELL-FACH — 103

FIG. 1

When a UE performs current processing of a service, the UE determines a time to trigger interval between a current time to trigger and a next time to trigger of the service according to a historical time to trigger interval of the service ⌐201

The UE determines, according to historical usage duration of a high speed channel in each processing of the service, usage duration of a high speed channel in the current processing of the service ⌐202

The UE determines whether the action needs to use a high speed channel ⌐203
No

The UE determines whether the time to trigger interval is greater than the sum of the usage duration of the high speed channel and duration of an inactivity timer ⌐205

Yes

No

Yes ⌐206

The UE determines that an RRC status currently needed by the service is CELL-DCH ⌐204

The UE determines that an RRC status currently needed by the service is CELL-FACH

The UE determines an expected RRC status according to RRC statuses currently needed by services ⌐207

The UE indicates the expected RRC status to a radio network device ⌐208

The radio network device makes an RRC status transition decision according to the expected RRC status ⌐209

FIG. 2

300

First determining
unit — 310

Second determining
unit — 330

Judging unit — 320

FIG. 3

300

First determining
unit — 310

Third determining
unit — 340

Second determining
unit — 330

Judging unit — 320

FIG. 3A

FIG. 3B

FIG. 4

EP 3 054 729 A1

# INTERNATIONAL SEARCH REPORT

| International application No. |
|---|
| **PCT/CN2013/086061** |

## A. CLASSIFICATION OF SUBJECT MATTER

H04W 52/02 (2009.01) i

According to International Patent Classification (IPC) or to both national classification and IPC

## B. FIELDS SEARCHED

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNPAT, CNKI, WPI, EPODOC: RRC CELL DCH FACH trigger time interval history high speed channel

## C. DOCUMENTS CONSIDERED TO BE RELEVANT

| Category* | Citation of document, with indication, where appropriate, of the relevant passages | Relevant to claim No. |
|---|---|---|
| A | CN 102946629 A (TSINGHUA UNIVERSITY), 27 February 2013 (27.02.2013), claim 1, and figures 1-3 | 1-36 |
| A | CN 102802209 A (COMBA TELECOM SYSTEMS (CHINA) CO., LTD.), 28 November 2012 (28.11.2012), the whole document | 1-36 |
| A | CN 102711063 A (DATANG MOBILE COMMUNICATIONS EQUIPMENT CO., LTD.), 03 October 2012 (03.10.2012), the whole document | 1-36 |
| A | WO 2013032376 A1 (TELEFONAKTIEBOLAGET L M ERICSSON PUBL et al.), 07 March 2013 (07.03.2013), the whole document | 1-36 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 July 2014 (10.07.2014) | **13 August 2014 (13.08.2014)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **WANG, Lunjie** Telephone No.: (86-10) **62413491** |
|---|---|

Form PCT/ISA/210 (second sheet) (July 2009)

## INTERNATIONAL SEARCH REPORT
### Information on patent family members

International application No.

**PCT/CN2013/086061**

| Patent Documents referred in the Report | Publication Date | Patent Family | Publication Date |
|---|---|---|---|
| CN 102946629 A | 27 February 2013 | None | |
| CN 102802209 A | 28 November 2012 | None | |
| CN 102711063 A | 03 October 2012 | None | |
| WO 2013032376 A1 | 07 March 2013 | EP 2742718 A1 | 18 June 2014 |

Form PCT/ISA/210 (patent family annex) (July 2009)